# EUROPEAN PATENT SPECIFICATION

(11) **EP 1 859 004 B1**
(45) Date of publication and mention of the grant of the patent: **03.07.2013**
(21) Application number: 06711012.2
(22) Date of filing: 02.03.2006
(51) Int. Cl.: C09K 8/64, C09K 8/68, C09K 8/70, C09K 8/88

(54) **WELL TREATMENT COMPOSITION CROSSLINKERS AND USES THEREOF**
BOHRLOCHBEHANDLUNGSMITTELVERNETZER UND DEREN VERWENDUNG
AGENTS DE RETICULATION POUR COMPOSITION DE TRAITEMENT DE PUITS ET UTILISATIONS CORRESPONDANTES

(30) Priority: 08.03.2005 US 75261
(43) Date of publication of application: 28.11.2007
(73) Proprietor: Schlumberger Technology B.V., 2514 JG The Hague (NL); Schlumberger Holdings Limited, Road Town, Tortola (VG); Services Pétroliers Schlumberger, 75007 Paris (FR)
(72) Inventor: DESSINGES, Marie, Noelle, Houston, Texas 77019 (US); PESSIN, Jean-louis, Houston, Texas 77077 (US)
(74) Representative: Fortt, Simon Merton
(86) International application number: PCT/IB2006/050662
(87) International publication number: WO 2006/095291

(56) References cited:
- WO-A-2006/030385
- US-A- 5 145 590
- US-A- 5 624 886
- US-A- 5 981 446
- US-A1- 2004 235 675
- US-B1- 6 242 390

## Description

### BACKGROUND OF THE INVENTION

This invention relates to compositions used in treating subterranean formations. In particular, the invention relates to a well fracturing composition containing a hydrated polymer which is mixed at the surface with a dry blended multi-functional component, and subsequently injected into a formation. The invention provides controlled crosslinking of the hydrated polymer thus achieving targeted fluid viscosity properties downhole.

In the recovery of hydrocarbons from subterranean formations it is common practice, particularly in low permeability formations, to fracture the hydrocarbon-bearing formation (i.e. to create a fracture or create a less resistance path for the formation fluids) to enhance oil and gas recovery. In such fracturing operations, a fracturing fluid that is capable of suspending a proppant is hydraulically injected into a wellbore that penetrates a subterranean formation. The fracturing fluid is forced against the formation strata by applying sufficient pressure to the extent that the fracturing fluid opens a fracture in the formation. This pressure is then maintained while injecting fracturing fluid at a sufficient rate to further extend the fracture in the formation. As the formation strata or rock is forced to crack and fracture, a proppant is placed in the fracture by movement of a viscous fluid containing proppant into the crack in the rock. After the pressure is reduced, the fracture closes on the proppant, thus preventing complete closure of the fracture. The resulting fracture, with proppant in place, provides improved flow of the recoverable fluid, i.e., oil, gas, or water, into the wellbore.

Water-based treatment fluids, such as aqueous hydraulic fracturing fluids, typically comprise a thickened or gelled aqueous solution formed by metering and combining large volumes of fluids at the surface, mixing the fluids together in a large mixing apparatus, before injecting the fluids into a wellbore. Obstacles facing the fracturing industry include large costs and environmental effects of operating and conducting fracturing treatments. Large costs are associated with storing and maintaining numerous liquids in large quantities in various, and sometimes remote, regions of the world. Further, the environmental effects of spillage and relatively large leftover quantities of fluid on site are increasingly becoming a problem for fracturing operators, as disposal of fluids is particularly troublesome under newer and more stringent environmental regulations.

In order to overcome some of these concerns, water-based hydraulic fracturing fluids based upon hydratable polymers, often comprise polymers supplied a powder form, or in a slurried form in a suspending agent, such as diesel fuel. These powdered polymers may be hydrated at the surface by mixing as described above. The polymer is then crosslinked to further thicken the fluid and improve its viscosity at elevated temperatures downhole, as well as providing thermal stability, decreased leak-off rate, and improved suspending properties. Polymers include polysaccharides, such as guar and synthesized derivatives of guar such as hydroxypropyl guar (HPG), carboxymethylhydroxypropyl guar (CMHPG), carboxymethyl guar (CMG), or hydrophobically modified guar. Boron, zirconium and titanium containing crosslinking agents typically are commonly used crosslinkers. In higher temperature environments, both boron and organometallic crosslinking agents offer advantages depending upon the fluid performance requirements of the particular fracturing treatment. Numerous other chemical additives such as antifoaming agents, biocides, leak-off controlling agents, and the like, are typically added to provide appropriate properties to the fluid after it is hydrated. Acids, bases, and breaker chemicals are typically used in fracturing fluids as well. This approach, however, still typically incorporates the use of other liquid components (i.e. crosslinker solutions) as well as large and expensive equipment.

It has been recognized that savings and convenience could be achieved by using dry components in well treatment compositions which are conveniently prepackaged for shipment, and which contain some if not all of the chemicals needed to prepare treatment fluids, such as fracturing fluids. For dry crosslinker components, such an approach would offer improved handling, especially in cold surface environments, where aqueous fluids may undergo freeze-thaw cycles.

It is known that in the case of crosslinker components, upon only adding the crosslinker to a hydrated polymer solution, crosslinking with the polymer instantaneously starts, which can result in an undesirable viscosity increase early in the treatment. To obtain proper viscosity properties downhole, or a decrease in the friction pressure while pumping (among other examples), delaying or controlling the onset and/or rate of crosslinking becomes important. For example, if crosslinking is controlled, a reserve of available crosslinking material may be made available, and an increased shear recovery may be realized thus giving fluid stability.

It has been commonly thought that in order to be efficient the crosslinker and chelating agent needed to be primarily dissolved to be able to interact together before to be added to the polymer. It was further believed that if the two materials were added simultaneously as dry materials to the polymer, the crosslinking reaction would be instantaneous.

U.S. Pat. No. 5,145,590 (Dawson), U.S. Pat. No. 5,160,643 (Dawson), and U.S. Pat. No. 5,082,579 (Dawson) describe crosslinking solutions that need to be added as a liquid not only for metering issues, but it is specifically emphasized that the chelating agent and crosslinker must be first dissolved together to allow interaction of the reactants. The idea underlying this is that the system should allow the two chemicals (chelating agent/crosslinker) to fully interact, bind, and thus reach equilibrium before the components are added to the polymer. In other words, in the prior art, it was believed that these components must be solubilized and reacted prior to mixing with the polymer.

U.S. Pat. No. 5,658,861 (Nelson, et al.), teaches that the crosslinking agent is physically sequestered in a polymer coating. The partial dissolution of the polymer in water allows the crosslinking specie to be delivered in solution with time, which yields to a delay in the crosslinking reaction. The crosslinker does not chemically interact with a chelating agent.

Slowly soluble borax type crosslinkers delivered in the form of a suspension are described in U.S. Pat. No. 5,565,513 (Kinsey, et al.). Here, the source of boron is typically anhydrous borax which dissolution rate is really low or a sparingly soluble borate solution, such as anhydrous boric acid. The delay mechanism is based only upon the difference in solubility of the different anhydrous boron sources. The crosslinker is further delivered as a slurry, for metering/ pumpability issues. It is taught that the delay time can be adjusted by the type of boron compound chosen (such as anhydrous borax, anhydrous boric acid, or mixture), by the size of the particle in the suspension, by the pH of the fracturing fluid, the concentration of the suspension in the fracturing fluid, the temperature of the fluid.

US 5 624 886 (Dawson et al) describes the preparation of a fracturing fluid by blending a hydratable polymer into an aqueous fluid (forming a hydrated polymer), a crosslinking agent and a breaker in the form of a pellet material which contains an oxidant a binder as well as a chelating agent and an activator. The crosslinking agent is not part of the dry multifunctional component.

U.S. Pat. No. 5,981,446 (Qui, et al.) teaches compositions including a dry blended particulate composition for hydraulic fracturing comprising a particulate hydratable polysaccharide, where the polysaccharide is formed of discrete particles. Also present is a particulate crosslinking agent, the crosslinking agent being effective to crosslink the hydratable polysaccharide composition. The composition may further include particulate metal oxides which adjust pH and allow crosslinking to begin.

U.S. Pat. No. 5,372,732 (Harris, et al.) describes crosslinked polymer gel compositions that may be used as fracturing fluids for oil and gas wells consisting of the dry crosslinker blended together with some gelling agent, leading to a delayed crosslinked fluid. In this invention, a portion of the polymer gel is pre-reacted as a liquid with a borate crosslinker, and subsequently dried. This produces a delayed release borate-polymer crosslinking agent, which is a partially crosslinked water-soluble polymer. Upon mixing this borate-polymer crosslinking agent with an aqueous polymer solution, the borate-polymer begins crosslinking with the polymer, at the same rate as water solubility.

Until the advent of this invention, it has been widely believed that crosslinking of a fracturing fluid composition would occur immediately upon mixing with an unreacted or non-complexed crosslinker, thus achieving high viscosity through premature crosslinking. Therefore, the need exists for well treatment fluids with dry blended materials with multiple functionalities that provide controlled crosslinked capability resulting in fluids with targeted viscosity properties which are handled conveniently and have good properties, especially in cold surface environments. A fluid that can achieve the above would be highly desirable, and the need is met at least in part by the following invention.

### SUMMARY OF THE INVENTION

In some embodiments of the invention, a well treatment fluid is provided which includes a hydrated polymer, and a dry blended multi-functional component. The hydrated polymer and dry blended multi-functional component are mixed at the ground surface of a wellsite, for example, and subsequently injected into the formation providing controlled delay in crosslinking to achieve targeted fluid viscosity properties. The hydrated polymer may be a guar, hydroxypropyl guar, carboxymethyl guar, carboxymethylhydroxypropyl guar, synthetic polymers, and guar-containing compounds. The dry blended multi-functional component may include a crosslinker and a chelating agent, and the well treatment fluid may further include an activator mixed with the hydratable polymer. The chelating agent may be a polyol, gluconate, sorbitol, mannitol, carbonate, or any mixtures thereof. The crosslinker may be any source of boron, alkaline earth metal borates, alkali metal borates, zirconium compounds, titanium compounds, or any combination thereof, while the activator may be a pH controlling agent or buffering agent, such as by nonlimiting example, caustic soda, magnesium oxide, sodium carbontate, sodium bicarbonate, and the like.

In another embodiment of the invention, the dry blended multi-functional component comprises a crosslinker and an activator, and the well treatment fluid further includes a chelating agent mixed with the hydratable polymer and dry blended multi-functional component at the surface. In yet another embodiment, the dry blended multi-functional component comprises a crosslinker, chelating agent, and an activator.

The invention further provides methods for producing a well treatment composition including providing a hydrated polymer, and providing a dry blended multi-functional component, wherein the hydrated polymer and dry blended multi-functional component are mixed at the surface and subsequently injected into the formation providing controlled delay in crosslinking to achieve targeted fluid viscosity properties.

A method of fracturing a subterranean formation including mixing a hydrated polymer and dry blended multi-functional component at the surface and subsequently injecting the mixture into a subterranean formation at a pressure sufficient to fracture the formation, as well as the use of treatment compositions containing a hydrated polymer and dry blended multi-functional component for hydraulically fracturing a subterranean formation, as well as cleanup operations and gravel packing a wellbore are provided as well.

### BRIEF DESCRIPTION OF THE DRAWINGS

FIG. 1 is a graph illustrating crosslinking delay measurements at varied dry chelating agent concentrations for a well treatment composition.

FIG. 2 is a graph illustrating viscosity stability of a well treatment composition according to the invention.

FIG. 3 is a graph illustrating the effect of dry particle size on crosslinking delay time

### DETAILED DESCRIPTION OF THE EMBODIMENTS OF THE INVENTION

The invention will now be more fully described in the more limited aspects of detailed embodiments thereof including a number of examples.

The invention provides compositions useful for treating subterranean formations. In particular, one embodiment of this invention relates to well fracturing compositions that include a hydrated polymer and a dry blended multi-functional component, both mixed at the surface and then injected into the well to provide controlled delay in crosslinking to achieve targeted fluid viscosity properties. The dry blended multi-functional component may be made of a dry crosslinker, a chelating agent, or an activator which serves as a pH controller, or any mixture thereof. Alternatively, the dry blended multi-functional component may include a chelating agent and an activator, while the crosslinker is added separately. The term "crosslinker" is meant to include any chemical compound containing a polyvalent metal ion effective in reacting with a polymer to provide adequate viscosity properties of the treatment composition. "Chelating agents" are those materials which provide a chelating effect on the crosslinker, thus limiting to any extent, the crosslinker-polymer chemical interactions which provide increased viscosity properties. "Activators" are materials which control, or buffer, the pH to achieve a desired pH value or range of values. The term "dry" and "dry particulate" means any form of material which is commercially available, transferred, or supplied, in a solid form (crystalline, amorphous, or otherwise), suspended form in a non-aqueous medium, and not in an aqueous solvated or aqueous slurried form. Any dry materials or dry particulates may contain commercially acceptable moisture levels. By "dry blending" it is meant mixing two dry materials and/or dry particulates while they exist in their dry form. "Hydrated polymers" are those polymers which are water mixable. "Targeted fluid viscosity properties" are fluid viscosity properties required to complete a particular operation, such as fracturing, well clean-up, gravel packing, proppant placement, and the like.

While this invention is not necessarily limited to any particular theory or theories of operation, it appears that dry blending a crosslinker with a chelating agent and/or activator to form a dry blended multi-functional component, and subsequently mixing the dry blended multi-functional component with a hydratable polymer, as well as an additional and optional activator or chelating agent, at the surface prior to injection into a formation, provides unexpected and good control in treatment composition crosslinking. By manipulating the relative amounts of crosslinker, activator, and/or chelating agent, the viscosity properties of the formation treatment composition may be tailored for the particular conditions within the formation, as well as for the requirements of the operation. Compositions according to the invention provide such advantages as convenient handling, particularly in cold environments, simplified field operations as a result of the reduced number of component streams, decreased preparation activities at the field location, enhanced QA/QC as a result of the combination of the streams as critical additive concentrations and ratio may be tightened within a single stream, higher temperature stability as the treatment fluid has improved rheology properties, as well as increased utilization of dry materials (i.e. decrease the weight of the chemicals to be transported, as liquid medium is necessarily present), and decreased waste of prepared chemicals to further provide compliance with difficult environments such as deep wells, cold external surface temperature, or offshore restrictions.

It is commonly believed that in order to function efficiently, a crosslinker and a chemical chelating agent need to be first dissolved together in a liquid medium so they will react before being added with the polymer. It is also believed that if the two components are added simultaneously as dry materials with a hydrated polymer, the crosslinking reaction between the polymer and crosslinker would be instantaneous. While the reaction between the crosslinker and the polymer is kinetically favored to the reaction between the crosslinker and the polyol, two effects may also be taken into account. First the dissolution rates of the two components may differ, and second, the kinetics of the crosslinker-polymer reaction can be displaced, as a function of the concentration of the products as well as the number of different reacting species present in the solution. The dissolution rate may be controlled in part by the granule or particle size.

In compositions according to the invention, a delay in crosslinking is realized when the two components with different functionalities, such as the crosslinker and the chelating agent, are manufactured together in the shape of a granule and delivered dry without requiring prior dissolution in an aqueous medium. Also, according to the invention, the two components with different functionalities need not be pre-reacted prior to mixing with the hydrated polymer, and the dry crosslinker remains essentially un-encapsulated. In some embodiments of the invention, granules comprising a dry crosslinker and dry chelating agent are added and metered through a dry feeder. As such, the crosslinking reaction of a hydrated gel is delayed.

According to the invention, delay of the crosslinking mechanism of the polymer may be achieved by placing a dry crosslinker species inside of a dry particulate that will dissolve with time under certain conditions of temperature, pH, and/or pressure. Further, the crosslinker is combined with another reactive species, such as a chelating and/or activator component, and the release of theses chemicals may be a function of time, temperature, as well as and concentration of the different reactant. In some embodiments of the invention, the delay in the crosslinking reaction is given by the time required by the crosslinker source to "escape" from the dry particulate and chelating agent, or "escape" from the dry particulate into an environment with the proper pH value, to become available for crosslinking.

In embodiments of the invention, the mechanism of crosslinking delay action is governed, at least in part, by the control of dissolution rate of the granulated dry particulate blend (or even a organic solvent suspended slurry) wherein the dissolution rate is energy driven (it includes but it is not limited to thermal energy, shearing energy, entropic energy). In other words, the crosslinking delay action is controlled by, but it is not limited to, the dissolution rate of the dry particulate itself, combined with the dissolution rate of whatever components (i.e. crosslinker, chelating agent, and/or activator) comprise the blend.

In another embodiment of the invention, the mechanism of crosslinking delay action is controlled by the chelating-release mechanism of the crosslinker specie with a chelating agent. For example, the chelating-release mechanism may be driven by the thermodynamics/kinetics of the reactions occurring between the crosslinker, the gelling agent and/or the competitive chelating ligand.

Yet another embodiment of the invention delays the crosslinking action by blending crosslinkers with different crosslinking rates in ratios that provide desired crosslinking rates. For example, the ratio of the anhydrous borax to the decahydrate borax can be tailored to achieve desired crosslinking properties, and hence, composition viscosities. The delay mechanism in these cases may also be a function of the hydration rate, dispersion, and solubilization of the crosslinker species. In other embodiments of the invention, control of the crosslinking action may be achieved by using blends of species of different sizes, or even by using particular sizes of granulated particles being blended.

The dry blended multi-functional component according to the invention may comprise a crosslinker wherein the chelating agent serves shear recovery function as well, and where the activator is added separately to the composition.

The well treatment compositions according to the invention include a hydrated polymer. The hydrated polymer useful in the present invention may include any hydratable polymers familiar to those in the well service industry that is capable of crosslinking with metal ions to form a composition with adequate and targeted viscosity properties for particular operations. Suitable hydratable polymers include, but are not necessarily limited to, galactomannan gums, glucomannan gums, guars, derived guars and cellulose derivatives. Nonlimiting examples include guar gum, guar gum derivatives, locust bean gum, karaya gum, carboxymethyl cellulose, carboxymethylhydroxyethyl cellulose, and hydroxyethyl cellulose. The preferred hydratable polymers in the invention are selected from the group consisting of guar, hydroxypropyl guar, carboxymethyl guar, carboxymethylhydroxypropyl guar, synthetic polymers, and guar-containing compounds. The dry hydratable polymer is added in concentrations up to about 0.60% by weight of total composition weight, to form the treatment composition. The preferred range for the embodiments of the invention is from about 0.05% to about 0.40% by weight of total composition weight.

The crosslinking system used in embodiments of the invention utilize a novel dry blended multi-functional component to control the crosslinking rate of the hydrated polymer. Polymer crosslinking consists of the attachment of two polymeric chains through the chemical association of such chains to a common element or chemical group. Suitable crosslinkers used in the dry blended multi-functional component solution may comprise a chemical compound containing a polyvalent metal ion such as, but not necessarily limited to, chromium, iron, boron, aluminum, titanium, and zirconium, or any combination of any of the above. Preferably, the crosslinker is a material which supplies borate ions in solution, such as a slowly soluble boron specie, alkaline form of boron, boric acid, borax anhydrous or hydrated, alkaline earth metal borates, alkali metal borates, and any mixtures of the above. A preferred crosslinker is boric acid. The crosslinker additive is present in the amount of up to about 0.3% by weight of total composition weight, preferably in the range from about 0.01% to about 0.2% by weight of total composition weight, more preferably from about 0.01% to about 0.05% by weight of total composition weight.

Well treatment compositions according to the invention comprise a chelating agent which may be a ligand that effectively complexes with the crosslinker. Any suitable chelating agent known to those in the art may be used. Examples of suitable chelating agents include, but are not necessarily limited to, polyols, gluconates, sorbitols, mannitols, carbonates, or any mixtures thereof. A preferred chelating agent is sodium gluconate. The chelating agent is present in the amount of up to about 0.4% by weight of total composition weight, preferably in the range of from about 0.02% to about 0.3% by weight of total composition weight, more preferably from about 0.02% to about 0.2% by weight of total composition weight. The chelating agent may be included as part of the dry blended multi-functional component, or added as a separate stream to form the treatment composition.

Some embodiments of the invention include an activator which functions as a pH controller, or also referred to as a pH buffer. Any suitable pH controlling activator may be used. Examples of suitable activators include, but are not necessarily limited to, caustic soda, magnesium oxide, sodium carbontate, sodium bicarbonate, and the like. Preferred activators include caustic soda, magnesium oxide compounds, or any mixture thereof. The activator is present in the amount up to about 0.6% by weight of total composition weight, preferably from about 0.06% to about 0.5% by weight of total composition weight. The activator may be included as part of the dry blended multi-functional component, or added as a separate stream to form the treatment composition.

A particularly useful dry blended multi-functional component comprises a boric acid crosslinker and sodium gluconate chelating agent wherein the component comprises from about 25% to about 35% by weight of boric acid, from about 60% to about 70% by weight of sodium gluconate, and up to about 2% by weight of moisture. This dry blended multi-functional component is added in the amount of up to about 0.7% by weight of total composition weight.

According to one embodiment of the invention, the multi-functional component is suspended in a non-aqueous medium prior to mixing and injection into the formation. The suspension includes the blended multi-functional component in a suspension preferably containing a non-aqueous medium, or organic solvent and preferably, a suspension aid, to assist in achieving delayed crosslinking. A particularly useful suspension contains a dry granulated blend, made of boric acid crosslinker and weight sodium gluconate chelating agent, and hydroxyl propyl cellulose suspension aid in glycol ether mutual non-aqueous solvent.

Compositions of the invention are useful in oilfield operations, including such operations as fracturing subterranean formations, modifying the permeability of subterranean formations, fracture or wellbore cleanup, acid fracturing, matrix acidizing, gravel packing or sand control, and the like. Another application includes the placement of a chemical plug to isolate zones or to assist an isolating operation.

The compositions of the invention may include an electrolyte which may be an organic acid, organic acid salt, or inorganic salt. Mixtures of the above members are specifically contemplated as falling within the scope of the invention. This member will typically be present in a minor amount (e.g. less than about 15% by weight of the total composition weight).

The organic acid is typically a sulfonic acid or a carboxylic acid, and the anionic counterion of the organic acid salts is typically a sulfonate or a carboxylate. Representative of such organic molecules include various aromatic sulfonates and carboxylates such as p-toluene sulfonate, naphthalene sulfonate, chlorobenzoic acid, salicylic acid, phthalic acid and the like, where such counter-ions are water-soluble. Most preferred organic acids are formic acid, citric acid, 5-hydroxy-1-napthoic acid, 6- hydroxy-1-napthoic acid, 7-hydroxy-1-napthoic acid, 1-hydroxy-2-naphthoic acid, 3-hydroxy-2-naphthoic acid, 5-hydroxy-2-naphthoic acid, 7-hydroxy-2-napthoic acid, 1, 3-dihydroxy-2-naphthoic acid, and 3,4- dichlorobenzoic acid.

The inorganic salts that are particularly suitable include, but are not limited to, water-soluble potassium, sodium, and ammonium salts, such as potassium chloride, ammonium chloride, and tetra-methyl ammonium salts. Additionally, magnesium chloride, calcium chloride, calcium bromide, zinc halide, sodium carbonate, and sodium bicarbonate salts may also be used. Any mixtures of the inorganic salts may be used as well. The inorganic salts may aid in the development of increased viscosity that is characteristic of preferred fluids. Further, the inorganic salt may assist in maintaining the stability of a geologic formation to which the fluid is exposed. Formation stability, and in particular clay stability (by inhibiting hydration of the clay for example), is achieved at a concentration level of a few percent by weight and as such the density of fluid is not significantly altered by the presence of the inorganic salt unless fluid density becomes an important consideration, at which point, heavier inorganic salts may be used. In a preferred embodiment of the invention, the electrolyte is potassium chloride. The electrolyte is preferably used in an amount of from about 0.01 wt% to about 15.0 wt% of the total composition weight, and more preferably from about 1.0 wt% to about 8.0 wt% of the total composition weight.

Embodiments of the invention may also comprise an organoamino compound. Examples of suitable organoamino compounds include, but are not necessarily limited to, tetraethylenepentamine, triethylenetetramine, pentaethylenhexamine, triethanolamine, and the like, or any mixtures thereof. When organoamino compounds are used in fluids of the invention, they are incorporated at an amount up to about 2.0 wt% based on total composition weight. Preferably, when used, the organoamino compound is incorporated at an amount from about 0.01 wt% to about 1.0 wt% based on total composition weight. Particularly useful organoamino compounds include tetraethylenepentamine or triethanolamine.

Compositions according to the invention may also include a surfactant. Viscoelastic surfactants, such as those described in U.S. Patent Nos. 6,703,352 (Dahayanake et al.) and 6,482,866 (Dahayanake et al.), are also suitable for use in compositions of the invention. In some embodiments of the invention, the surfactant is an ionic surfactant. Examples of suitable ionic surfactants include, but are not limited to, anionic surfactants such as alkyl carboxylates, alkyl ether carboxylates, alkyl sulfates, alkyl ether sulfates, alkyl sulfonates, α-olefin sulfonates, alkyl ether sulfates, alkyl phosphates and alkyl ether phosphates. Examples of suitable ionic surfactants also include, but are not limited to, cationic surfactants such as alkyl amines, alkyl diamines, alkyl ether amines, alkyl quaternary ammonium, dialklyl quaternary ammonium and ester quaternary ammonium compounds. Examples of suitable ionic surfactants also include, but are not limited to, surfactants that are usually regarded as zwitterionic surfactants and in some cases as amphoteric surfactants such as alkyl betaines, alkyl amido betaines, alkyl imidazolines, alkyl amine oxides and alkyl quaternary ammonium carboxylates. The amphoteric surfactant is a class of surfactant that has both a positively charged moiety and a negatively charged moiety over a certain pH range (e.g. typically slightly acidic), only a negatively charged moiety over a certain pH range (e.g. typically slightly alkaline) and only a positively charged moiety at a different pH range (e.g. typically moderately acidic), while a zwitterionic surfactant has a permanently positively charged moiety in the molecule regardless of pH and a negatively charged moiety at alkaline pH. In some embodiments of the invention, the surfactant is a cationic, zwitterionic or amphoteric surfactant containing an amine group or a quaternary ammonium group in its chemical structure ("amine functional surfactant"). A particularly useful surfactant is n-decyl-N,N-dimethlyamine oxideas disclosed in U.S. Pat. No. 6,729,408 (Hinkel, et al.). In other embodiments of the invention, the surfactant is a blend of two or more of the surfactants described above, or a blend of any of the surfactant or surfactants described above with one or more nonionic surfactants. Examples of other suitable nonionic surfactants include, but are not limited to, alkyl alcohol ethoxylates, alkyl phenol ethoxylates, alkyl acid ethoxylates, alkyl amine ethoxylates, sorbitan alkanoates and ethoxylated sorbitan alkanoates. Any effective amount of surfactant or blend of surfactants may be used in aqueous fluids of the invention. When incorporated, the surfactant, or blend of surfactants, are typically incorporated in an amount of up to about 5% by weight of total composition weight, preferably in an amount of about 0.02 wt% to about 5 wt% of total composition weight, and more preferably from about 0.05 wt% to about 2 wt% of total composition weight.

Commonly known friction reducers may also be incorporated into compositions of the invention. Any friction reducer may be used. Also, polymers such as polyacrylamide, polyisobutyl methacrylate, polymethyl methacrylate and polyisobutylene as well as water-soluble friction reducers such as guar gum, guar gum derivatives, polyacrylamide, and polyethylene oxide may be used. Commercial drag reducing chemicals such as those sold by Conoco Inc. under the trademark "CDR" as described in U. S. Pat. No. 3,692,676 (Culter et al.) or drag reducers such as those sold by Chemlink designated under the trademarks "FLO 1003, 1004, 1005 & 1008" have also been found to be effective. These polymeric species added as friction reducers or viscosity index improvers may also act as excellent fluid loss additives reducing or even eliminating the need for conventional fluid loss additives.

Compositions based on the invention may also comprise a breaker. The purpose of this component is to "break" or diminish the viscosity of the fluid so that this fluid is more easily recovered from the formation during cleanup. With regard to breaking down viscosity, oxidizers, enzymes, or acids may be used. Breakers reduce the polymer's molecular weight by the action of an acid, an oxidizer, an enzyme, or some combination of these on the polymer itself. In the case of borate-crosslinked gels, increasing the pH and therefore increasing the effective concentration of the active crosslinker, the borate anion, reversibly creates the borate crosslinks. Lowering the pH can just as easily eliminate the borate/polymer bonds by decreasing the amount of borate anions available in solution, and/or enables complete hydrolysis of the polymer.

Embodiments of the invention may also include proppant particles that are substantially insoluble in the fluids of the formation. Proppant particles carried by the treatment composition remain in the fracture created, thus propping open the fracture when the fracturing pressure is released and the well is put into production. Suitable proppant materials include, but are not limited to, sand, walnut shells, sintered bauxite, glass beads, ceramic materials, naturally occurring materials, or similar materials. Mixtures of proppants can be used as well. If sand is used, it may be of any useful grade or size, and will typically be from about 20 to about 100 U.S. Standard Mesh in size. Naturally occurring materials may be underived and/or unprocessed naturally occurring materials, as well as materials based on naturally occurring materials that have been processed and/or derived. Suitable examples of naturally occurring particulate materials for use as proppants include, but are not necessarily limited to: ground or crushed shells of nuts such as walnut, coconut, pecan, almond, ivory nut, brazil nut, etc.; ground or crushed seed shells (including fruit pits) of seeds of fruits such as plum, olive, peach, cherry, apricot, etc.; ground or crushed seed shells of other plants such as maize (e.g., corn cobs or corn kernels), etc.; processed wood materials such as those derived from woods such as oak, hickory, walnut, poplar, mahogany, etc. including such woods that have been processed by grinding, chipping, or other form of particalization, processing, etc. Further information on nuts and composition thereof may be found in Encyclopedia of Chemical Technology, Edited by Raymond E. Kirk and Donald F. Othmer, Third Edition, John Wiley & Sons, Volume 16, pages 248-273 (entitled "Nuts"), Copyright 1981.

The concentration of proppant in the composition may be any concentration known in the art, and will preferably be in an amount up to about 3 kilograms of proppant added per liter of composition. Also, any of the proppant particles can further be coated with a resin to potentially improve the strength, clustering ability, and flow back properties of the proppant.

The aqueous medium used to hydrate the polymers of invention may be water or brine. In those embodiments of the invention where the aqueous medium is a brine, the brine is water comprising an inorganic salt or organic salt. Preferred inorganic salts include alkali metal halides, more preferably potassium chloride. The carrier brine phase may also comprise an organic salt more preferably sodium or potassium formate. Preferred inorganic divalent salts include calcium halides, more preferably calcium chloride or calcium bromide. Sodium bromide, potassium bromide, or cesium bromide may also be used. The salt may be chosen for compatibility reasons, for example, where the reservoir drilling composition used a particular brine phase and the completion/clean up composition brine phase is chosen to have the same brine phase.

A fiber component may be included in compositions of the invention to achieve a variety of properties including improving particle suspension, and particle transport capabilities, and foam stability. Fibers used may be hydrophilic or hydrophobic in nature, but hydrophilic fibers are preferred. Fibers can be any fibrous material, such as, but not necessarily limited to, natural organic fibers, comminuted plant materials, synthetic polymer fibers (by non-limiting example polyester, polyaramide, polyamide, novoloid or a novoloid-type polymer), fibrillated synthetic organic fibers, ceramic fibers, inorganic fibers, metal fibers, metal filaments, carbon fibers, glass fibers, ceramic fibers, natural polymer fibers, and any mixtures thereof. Particularly useful fibers are polyester fibers coated to be highly hydrophilic, such as, but not limited to, DACRON® polyethylene terephthalate (PET) Fibers available from Invista Corp. Wichita, KS, USA, 67220. Other examples of useful fibers include, but are not limited to, polylactic acid polyester fibers, polyglycolic acid polyester fibers, polyvinyl alcohol fibers, and the like. When used in compositions of the invention, the fiber component may be include at concentrations from about 1 to about 15 grams per liter of the composition, preferably the concentration of fibers are from about 2 to about 12 grams per liter of composition, and more preferably from about 2 to about 10 grams per liter of composition.

Embodiments of the invention may further contain other additives and chemicals that are known to be commonly used in oilfield applications by those skilled in the art. These include, but are not necessarily limited to, materials such as surfactants in addition to those mentioned hereinabove, breaker aids in addition to those mentioned hereinabove, oxygen scavengers, alcohols, scale inhibitors, corrosion inhibitors, fluid-loss additives, bactericides, clay stabilizers, and the like. Also, they may include a co-surfactant to optimize viscosity or to minimize the formation of stable emulsions that contain components of crude oil or a polysaccharide or chemically modified polysaccharide, polymers such as cellulose, derivatized cellulose, guar gum, derivatized guar gum, xanthan gum, or synthetic polymers such as polyacrylamides and polyacrylamide copolymers, oxidizers such as ammonium persulfate and sodium bromate, and biocides such as 2,2-dibromo-3-nitrilopropionamine.

Compositions according to the invention may be foamed and energized well treatment fluids which contain "foamers", which are most commonly surfactants or blends of surfactants that facilitate the dispersion of a gas into the composition to form of small bubbles or droplets, and confer stability to the dispersion by retarding the coalescence or recombination of such bubbles or droplets. Foamed and energized fluids are generally described by their foam quality, i.e. the ratio of gas volume to the foam volume. If the foam quality is between 52% and 95%, the fluid is conventionally called a foam fluid, and below 52%, an energized fluid. Hence, compositions of the invention may include ingredients that form foams or energized fluids, such as, but not necessarily limited to, foaming surfactant, or blends of surfactants, and a gas which effectively forms a foam or energized fluid. Suitable examples of such gases include carbon dioxide, nitrogen, or any mixture thereof.

In most cases, a hydraulic fracturing consists of pumping a proppant-free composition, or pad, into a well faster than the composition can escape into the formation so that the pressure rises and the rock breaks, creating artificial fractures and/or enlarging existing fractures. Then, proppant particles are added to the composition to form a slurry that is pumped into the fracture to prevent it from closing when the pumping is ceased and fracturing pressure declines. The proppant suspension and transport ability of the treatment base composition traditionally depends on the type of viscosifying agent added.

Another embodiment of the invention includes the use of compositions of the invention for hydraulically fracturing a subterranean formation. Techniques for hydraulically fracturing a subterranean formation will be known to persons of ordinary skill in the art, and will involve pumping the fracturing fluid into the borehole and out into the surrounding formation. The fluid pressure is above the minimum in situ rock stress, thus creating or extending fractures in the formation. See Stimulation Engineering Handbook, John W. Ely, Pennwell Publishing Co., Tulsa, Okla. (1994), U.S. Patent No. 5,551,516 (Normal et al.), "Oilfield Applications", Encyclopedia of Polymer Science and Engineering, vol. 10, pp. 328-366 (John Wiley & Sons, Inc. New York, New York, 1987) and references cited therein.

In the fracturing treatment, compositions of the present invention may be used in the pad treatment, the proppant stage, or both. The components are mixed on the surface. Alternatively, a the composition may be prepared on the surface and pumped down tubing while a gas component, such as carbon dioxide or nitrogen, could be pumped down the annular to mix down hole, or vice versa, to form a foam or energized fluid composition.

Yet another embodiment of the invention includes the use of compositions based on the invention for cleanup. The term "cleanup" or "fracture cleanup" refers to the process of removing the fracture composition (without the proppant) from the fracture and wellbore after the fracturing process has been completed. Techniques for promoting fracture cleanup traditionally involve reducing the viscosity of the fracture composition as much as practical so that it will more readily flow back toward the wellbore. While breakers are typically used in cleanup, the compositions of the invention are inherently effective for use in cleanup operations, with or without a breaker.

In another embodiment, the invention relates to use of compositions based on the invention for gravel packing a wellbore. As a gravel packing composition, it preferably comprises gravel or sand and other optional additives such as filter cake clean up reagents such as chelating agents referred to above or acids (e.g. hydrochloric, hydrofluoric, formic, acetic, citric acid) corrosion inhibitors, scale inhibitors, biocides, leak-off control agents, among others. For this application, suitable gravel or sand is typically having a mesh size between 8 and 70 U.S. Standard Sieve Series mesh.

The following examples are presented to illustrate the preparation and properties of compositions comprising includes a hydrated polymer which is mixed with a dry blended multi-functional component. All percentages, concentrations, ratios, parts, etc. are by weight unless otherwise noted or apparent from the context of their use.

### EXAMPLES

The following examples illustrate the compositions and methods of the invention, as described in the detailed description of the embodiments.

In some of the examples, "first lip time" and "final lip time" measurements are reported. The following procedure was followed to record the crosslinking delay time in terms of "first lip time" and "final lip time":
a. a linear polymer gel was prepared before any crosslinking test by hydrating 4.2 gram per liter of aqueous medium polymer gel in a Warring blender using deionized water, the speed of the Warring blender is adjusted so that a vortex forms, and the mixing is allowed to continue for a 1 hour period;
b. then according to the design of the experiment, a dry blended multi-functional component is typically added simultaneously with any activator, and the timer is started;
c. the composition is mixed for 10 additional seconds;
d. the composition is poured into a suitable sized beaker, then poured from that beaker to another beaker, and repeatedly back and forth, until a fluid tongue the size of a thumb tip is formed and retracts back into the beaker from which the composition is poured, the time at which this occurs being the "first lip time"; and,
e. the time at which pouring the composition from beaker to beaker forms a tongue, that retracts back into the beaker from which the composition is poured, of length of about 5 cm long is the "final lip time."

### Example 1

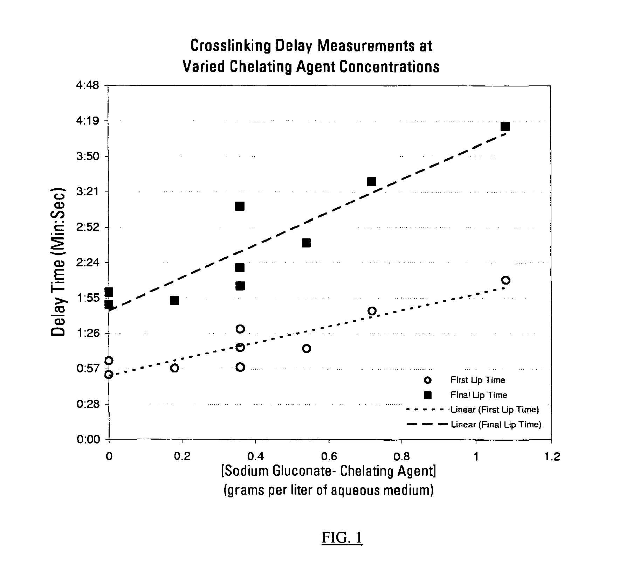

Example 1 illustrates the crosslinking delay obtained as a function of the concentration of chelating agent. The data presented here were obtained with sodium gluconate chelating agent and boric acid crosslinker added as a powder to the hydrated polymer. In this example, 4.2 grams of commercially available guar (from Economy Polymers & Chemical Co. of Houston, Texas, 77245-0246) per liter of aqueous medium were hydrated in a Warring blender for 30 minutes at 2000 rpm. 0.18 grams of dry caustic activator per liter of aqueous medium, and 0.18 grams of dry boric acid crosslinker per liter of aqueous medium were added, and different amount of sodium gluconate chelating agents were incorporated. Composition temperature was held at about 21 °C. Then the first lip time and the final lip time were recorded for the different samples, as illustrated in FIG. 1. FIG. 1 shows that increasing the level of dry powdered chelating agent added to the hydrated guar in the presence of an activator and crosslinker, has a direct effect on delay time, as illustrated with the increase in first lip time and the final lip time.

### Example 2

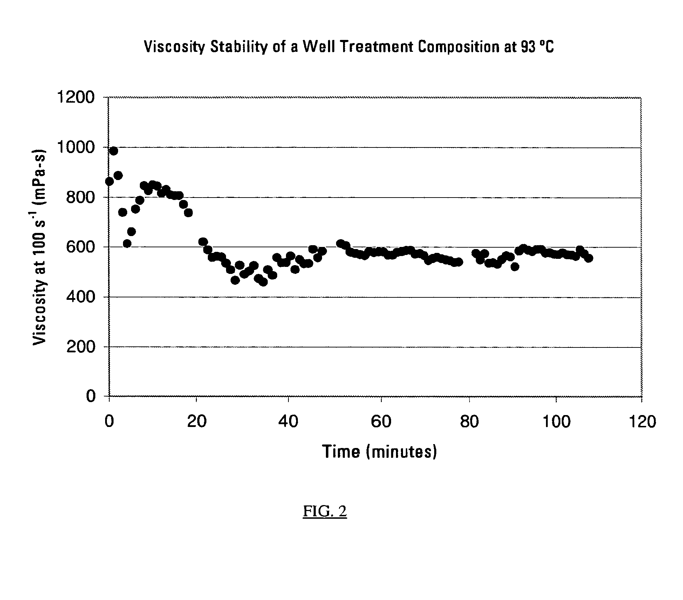

Example 2 demonstrates viscosity stability of a well treatment composition according to the invention. In example 2, 4.2 grams of guar (supplied by Economy Polymers & Chemical Co.) per liter of aqueous medium was hydrated for 30 minutes in a Earring blender at 2000 rpm at 24 °C, then mixed with 0.18 grams of caustic activator per liter of aqueous medium, and 0.56 grams of a dry granulated blend per liter of aqueous medium, composed of 1 part by weight dry boric acid crosslinker and 2 parts by weight dry sodium gluconate chelating agent. The treatment composition was then placed into a Fann 50 viscometer cup and the viscosity of the fluid was measured as a function of time at a temperature of about 93 °C. As illustrated in the graph of FIG. 2, the fluid is stable at 93 °C up to at least 110 minutes.

### Example 3

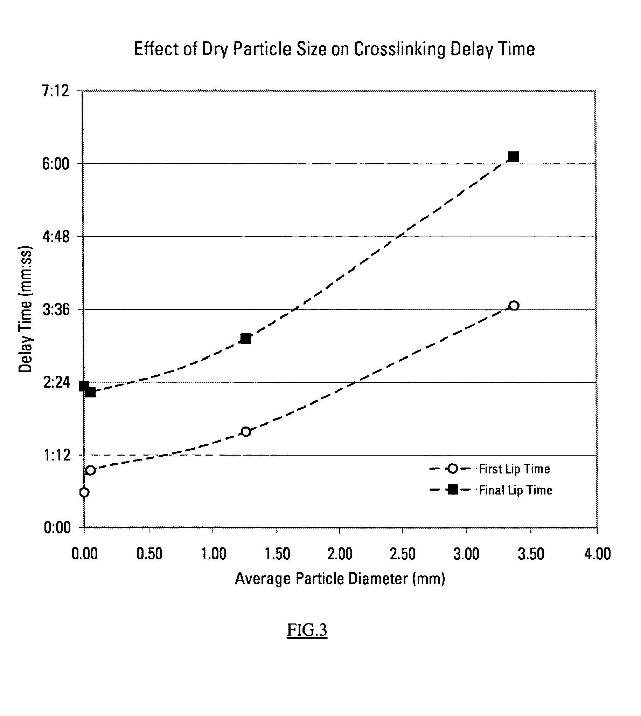

Example 3 describes the influence of the granule size on the delay time. In example 3, 4.2 grams of guar (supplied by Economy Polymers & Chemical Co.) per liter of aqueous medium was hydrated for 30 minutes in a Warring blender at 2000 rpm at 24 °C, then mixed with 0.18 grams of dry caustic activator per liter of aqueous medium, and 0.63 grams per liter of aqueous medium of a blend composed of 1 part by weight of dry boric acid crosslinker and 2.5 parts by weight of dry sodium gluconate chelating agent. Then the first lip time and the final lip time were recorded for the different samples, as illustrated in FIG. 3. In the graph illustrated in FIG. 3, the first set of data points at 0.00 mm average particle diameter, activator, chelating agent, and crosslinker were added to the hydrated guar in liquid form. The second set of data points, which represents particles which are slightly greater than, but still essentially 0.00 mm diameter particle size, represents the activator, chelating agent, and crosslinker added in pulverized form. The third set of data points represents an average particle diameter of 1.26 mm (blended granules of mesh size 10/20) of activator, chelating agent, and crosslinker, and the last data set, an average particle diameter of 3.38 mm (blended granules of mesh size of 4/10). The graph of FIG. 3 clearly shows the effect of the particle granule size on the delay of crosslinking. Hence, there exists a correlation between particle size diameter and crosslinking delay as the larger the particle size diameter, the longer the crosslinking delay.

### Example 4

In a fourth experiment, which demonstrates the delay effect of a dry blended multi-functional component including a zirconium crosslinker and gluconate chelating agent, a hydrated aqueous solution of CMHPG with the polymer added at 0.42% by weight of total mixture weight was prepared, under relevant pH conditions, by mixing 30 minutes in a Warring blender at room temperature. After hydration of the CMHPG the pH of the solution was buffered to a pH of about 9.5 to promote crosslinking by using caustic soda. The hydrated CMHPG was then mixed with about 0.02% by weight of total mixture weight of a dry blend of sodium zirconium lactacte crosslinker and sodium gluconate chelating agent in a molar ratio of 40:1, and the composition was further mixed for about five to ten seconds. It was observed that the crosslinking reaction was delayed, and the time to crosslink and achieve adequate viscosity final lip was about 1 minute.

### Example 5

Example 5 illustrates the use of the dry blended multi-functional component in a suspension comprising a non-aqueous medium to achieve delayed crosslinking. A suspension of 20% by weight of the dry granulated blend, made of a ratio of 1 part boric acid crosslinker by weight and 2 parts by weight sodium gluconate chelating agent, and 80% by weight of a suspension solution, which included 0.75% by weight hydroxyl propyl cellulose in glycol ether mutual solvent, was prepared. A hydrated aqueous solution of CMHPG with the polymer added at 0.42% by weight of total mixture weight was prepared by mixing 30 minutes in a warring blender at room temperature. 500 mL of the hydrated CMHPG solution was then crosslinked using 1.35 g of the suspending solution and 225 microliters of a 28% by weight caustic solution. The fluid was further mixed for about 10 seconds. The first lip time was found to be in the order of 50 seconds and the final lip time was 1:40 minutes.

### Example 6

In example 6, it is illustrated that using a dry magnesium oxide activator component together with sodium gluconate chelating agent (i.e. a slowly soluble base together with a delay agent such as sodium gluconate) delays the crosslinking reaction of a hydrated polymer solution. A hydrated aqueous solution of CMHPG was prepared with the polymer added at 0.42% by weight of total mixture weight was prepared, by mixing 30 minutes in a Warring blender at room temperature. 0.024% of dry sodium gluconate chelating agent was added to 500 mL of the hydrated CMHPG gel, and the composition was mixed for 30 seconds. Then, 0.42 grams of a dry blended composition that comprises 5 parts by weight magnesium oxide and 2 parts by weight boric acid, was added to the composition. The fluid was further mixed at 2000 RPM for 10 seconds. The first lip time was about 1 minute and the final lip time was about 2 minutes.

### Example 7

In example 7, it is again shown that using a dry magnesium oxide activator component together with sodium gluconate chelating agent, the crosslinking reaction of a hydrated polymer solution is delayed. A hydrated aqueous solution of CMHPG was prepared with the polymer added at 0.42% by weight of total mixture weight was prepared, by mixing 30 minutes in a Warring blender at room temperature. 0.024% of dry boric acid crosslinker was added to 500 mL of the hydrated CMHPG gel, and the composition was mixed for 30 seconds. Then, 0.24 grams of a dry blended composition that comprises 1 part by weight magnesium oxide activator and 1 part by weight dry sodium gluconate chelating agent, was added to the composition. The fluid was further mixed at 2000 RPM for 10 seconds. The first lip time was about 1 minute and the final lip time was about 4 minutes.

## Claims

1. A method for producing a well treatment composition comprising:
(a) providing a well treatment fluid comprising hydrated polymer, and
(b) providing a dry blended multi-functional component comprising a crosslinker, and at least one of a chelating agent and an activator;
mixing the well treatment fluid comprising hydrated polymer, and the dry blended multi-functional component at the surface and subsequently injecting into a formation wherein the mixing is in relative amounts providing controlled delay in crosslinking and fluid viscosity properties targeted to a particular treatment operation and condition within the formation.

2. The method according to claim 1 wherein the hydrated polymer is selected from the group consisting of guar, hydroxypropyl guar, carboxymethyl guar, carboxymethyl-hydroxypropyl guar, synthetic polymers, and guar-containing compounds.

3. The method according to claim 1 or claim 2 wherein the at least one of a chelating agent and an activator of the dry blended multi-functional component is a chelating agent and the method further comprises mixing an activator with the hydrated polymer and dry blended multi-functional component at the surface.

4. The method according to claim 3, wherein
the crosslinker is selected from the group consisting of any source of boron, alkaline earth metal borates, alkali metal borates, zirconium compounds, titanium compounds, or any combination thereof,
the chelating agent is selected from the group consisting of polyols, gluconates, sorbitols, mannitols, carbonates, or any mixtures thereof,
and
the activator is selected from the group consisting of caustic soda, magnesium oxide, sodium carbonate, sodium bicarbonate, or any mixture thereof.

5. The method according claim 1 or claim 2 wherein the at least one of a chelating agent and an activator of the dry blended multi-functional component is an activator and the method further comprises mixing a chelating agent with the hydrated polymer and dry blended multi-functional component at the surface.

6. The method according to claim 5 wherein
the crosslinker is selected from the group consisting of any source of boron, alkaline earth metal borates, alkali metal borates, zirconium compounds, titanium compounds, or any combination thereof,
the activator is selected from the group consisting of caustic soda, magnesium oxide, sodium carbonate, sodium bicarbonate, or any mixture thereof
and
the chelating agent is selected from the group consisting of polyols, gluconates, sorbitols, mannitols, carbonates, or any mixtures thereof,

7. The method according to claim 1 or claim 2 wherein the at least one of a chelating agent and an activator of the dry blended multi-functional component is a chelating agent and an activator.

8. The method according to claim 7 wherein
the crosslinker is selected from the group consisting of any source of boron, alkaline earth metal borates, alkali metal borates, zirconium compounds, titanium compounds, or any combination thereof,
the chelating agent is selected from the group consisting of polyols, gluconates, sorbitols, mannitols, carbonates, or any mixtures thereof,
and
the activator is selected from the group consisting of caustic soda, magnesium oxide, sodium carbonate, sodium bicarbonate, or any mixture thereof.

9. The method according to any preceding claim, wherein the dry blended multi-functional component is suspended in a non-aqueous medium prior to mixing and injection into the formation.

10. A method according to any preceding claim, further comprising foaming or energizing the composition by adding a surfactant and gas component selected from the group consisting of nitrogen, carbon dioxide, and any mixture thereof,

11. A method according to any preceding claim, in which the treatment operation is a fracturing operation, a cleanup operation, or gravel packing a wellbore.

## Patentansprüche

1. Verfahren zum Erzeugen einer Bohrlochbehandlungszusammensetzung, das umfasst:
(a) Bereitstellen eines Bohrlochbehandlungsfluids, das hydriertes Polymer enthält, und
(b) Bereitstellen einer trockenen gemischten multifunktionalen Komponente, das ein Vernetzungsmittel und/oder ein Chelatbildungsmittel und ein Aktivierungsmittel enthält;
Mischen des Bohrlochbehandlungsfluids, das hydriertes Polymer enthält, und der trockenen gemischten multifunktionalen Komponente an der Oberfläche und anschließend Einleiten in eine Formation, wobei das Mischen mit relativen Mengen erfolgt, die eine kontrollierte Verzögerung der Vernetzung und Fluidviskositätseigenschaften schaffen, die auf eine bestimmte Behandlungsoperation und eine bestimmte Bedingung in der Formation gerichtet sind.

2. Verfahren nach Anspruch 1, wobei das hydrierte Polymer aus der Gruppe gewählt ist, die besteht aus Guar, Hydroxypropyl-Guar, Carboxymethyl-Guar, Carboxymethyl-Hydroxypropyl-Guar, synthetischen Polymeren und Guar enthaltenden Verbindungen.

3. Verfahren nach Anspruch 1 oder Anspruch 2, wobei das Chelatbildungsmittel und/oder das Aktivierungsmittel der trockenen gemischten multifunktionalen Komponente ein Chelatbildungsmittel ist und das Verfahren ferner das Mischen eines Aktivierungsmittels mit dem hydrierten Polymer und der trockenen gemischten multifunktionalen Komponente an der Oberfläche umfasst.

4. Verfahren nach Anspruch 3, wobei
das Vernetzungsmittel aus der Gruppe gewählt ist, die aus irgendeiner Quelle für Bor, Erdalkalimetall-Boraten, Alkalimetall-Boraten, Zirkonverbindungen, Titanverbindungen oder irgendeiner Kombination hiervon besteht,
wobei das Chelatbildungsmittel aus der Gruppe gewählt ist, die aus Polyolen, Gluconaten, Sorbitolen, Mannitolen, Carbonaten oder irgendwelchen Gemischen hiervon besteht,
und
das Aktivierungsmittel aus der Gruppe gewählt ist, die aus kaustischem Soda, Magnesiumoxid, Natriumcarbonat, Natriumbicarbonat und irgendeinem Gemisch hiervon besteht.

5. Verfahren nach Anspruch 1 oder Anspruch 2, wobei das Chelatbildungsmittel und/oder das Aktivierungsmittel der trockenen gemischten multifunktionalen Komponente ein Aktivierungsmittel ist und das Verfahren ferner das Mischen des Chelatbildungsmittels mit dem hydrierten Polymer und der trockenen gemischten multifunktionalen Komponente an der Oberfläche umfasst.

6. Verfahren nach Anspruch 5, wobei
das Vernetzungsmittel aus der Gruppe gewählt ist, die aus irgendeiner Quelle für Bor, Erdalkalimetall-Boraten, Alkalimetall-Boraten, Zirkonverbindungen, Titanverbindungen oder irgendeiner Kombination hiervon besteht,
das Aktivierungsmittel aus der Gruppe gewählt ist, die aus kaustischem Soda, Magnesiumoxid, Natriumcarbonat, Natriumbicarbonat oder irgendwelchen Gemischen hiervon besteht,
und
das Chelatbildungsmittel aus der Gruppe gewählt ist, die aus Polyolen, Gluconaten, Sorbitolen, Mannitolen, Carbonaten oder irgendwelchen Gemischen hiervon besteht.

7. Verfahren nach Anspruch 1 oder Anspruch 2, wobei das Chelatbildungsmittel und/oder das Aktivierungsmittel der trockenen gemischten multifunktionalen Komponente ein Chelatbildungsmittel und ein Aktivierungsmittel sind.

8. Verfahren nach Anspruch 7, wobei
das Vernetzungsmittel aus der Gruppe gewählt ist, die aus irgendeiner Quelle für Bor, Erdalkalimetall-Boraten, Alkalimetall-Boraten, Zirkonverbindungen, Titanverbindungen oder irgendeiner Kombination hiervon besteht,
das Chelatbildungsmittel aus der Gruppe gewählt ist, die aus Polyolen, Gluconaten, Sorbitolen, Mannitolen, Carbonaten oder irgendwelchen Gemischen hiervon besteht,
und
das Aktivierungsmittel aus der Gruppe gewählt ist, die aus kaustischem Soda, Magnesiumoxid, Natriumcarbonat, Natriumbicarbonat oder irgendeinem Gemisch hiervon besteht.

9. Verfahren nach einem vorhergehenden Anspruch, wobei die trockene gemischte multifunktionale Komponente vor dem Mischen und Einleiten in die Formation in einem nicht wässrigen Medium aufgeschlämmt wird.

10. Verfahren nach einem vorhergehenden Anspruch, das ferner das Aufschäumen oder Erregen der Zusammensetzung durch Hinzufügen einer oberflächenaktiven Substanz und einer Gaskomponente, die aus der Gruppe gewählt ist, die aus Stickstoff, Kohlenstoffdioxid und irgendeinem Gemisch hiervon besteht, umfasst.

11. Verfahren nach einem vorhergehenden Anspruch, wobei die Behandlungsoperation eine Zerklüftungsoperation, eine Sanierungsoperation oder ein Kiesfüllvorgang in einem Bohrloch ist.

## Revendications

1. Procédé de production d'une composition de traitement de puits comprenant :
(a) la fourniture d'un fluide de traitement de puits comprenant un polymère hydraté, et
(b) la fourniture d'un composant multifonctionnel mélangé à sec comprenant un agent de réticulation et au moins l'un d'un agent chélatant et d'un activateur ;
le mélange à la surface du fluide de traitement de puits comprenant le polymère hydraté et le composant multifonctionnel mélangé à sec, et l'injection ultérieure dans une formation dans laquelle le mélange se fait dans des quantités relatives assurant un retard contrôlé de la réticulation et une viscosité de fluide ciblée pour une opération de traitement et une condition particulières au sein de la formation.

2. Procédé selon la revendication 1, dans lequel le polymère hydraté est choisi dans le groupe constitué par le guar, l'hydroxypropylguar, le carboxyméthylguar, le carboxyméthylhydroxypropylguar, les polymères synthétiques et les composés contenant du guar.

3. Procédé selon la revendication 1 ou la revendication 2, dans lequel l'un au moins de l'agent chélatant et de l'activateur du composant multifonctionnel mélangé à sec est un agent chélatant et le procédé comprend en outre le mélange à la surface d'un activateur avec le polymère hydraté et le composant multifonctionnel mélangé à sec.

4. Procédé selon la revendication 3, dans lequel l'agent de réticulation est choisi dans le groupe constitué par toute source de bore, les borates de métal alcalino-terreux, les borates de métal alcalin, les composés de zirconium, les composés de titane ou toute combinaison de ceux-ci,
l'agent chélatant est choisi dans le groupe constitué par les polyols, les gluconates, les sorbitols, les mannitols, les carbonates ou tout mélange de ceux-ci,
et
l'activateur est choisi dans le groupe constitué par la soude caustique, l'oxyde de magnésium, le carbonate de sodium, le bicarbonate de sodium ou tout mélange de ceux-ci.

5. Procédé selon la revendication 1 ou la revendication 2, dans lequel l'un au moins de l'agent chélatant et de l'activateur du composant multifonctionnel mélangé à sec est un activateur et le procédé comprend en outre le mélange à la surface d'un agent chélatant avec le polymère hydraté et le composant multifonctionnel mélangé à sec.

6. Procédé selon la revendication 5, dans lequel l'agent de réticulation est choisi dans le groupe constitué par toute source de bore, les borates de métal alcalino-terreux, les borates de métal alcalin, les composés de zirconium, les composés de titane ou toute combinaison de ceux-ci,
l'activateur est choisi dans le groupe constitué par la soude caustique, l'oxyde de magnésium, le carbonate de sodium, le bicarbonate de sodium ou tout mélange de ceux-ci,
et
l'agent chélatant est choisi dans le groupe constitué par les polyols, les gluconates, les sorbitols, les mannitols, les carbonates ou tout mélange de ceux-ci.

7. Procédé selon la revendication 1 ou la revendication 2, dans lequel l'un au moins de l'agent chélatant et de l'activateur du composant multifonctionnel mélangé à sec est un agent chélatant et un activateur.

8. Procédé selon la revendication 7, dans lequel l'agent de réticulation est choisi dans le groupe constitué par toute source de bore, les borates de métal alcalino-terreux, les borates de métal alcalin, les composés de zirconium, les composés de titane ou toute combinaison de ceux-ci,
l'agent chélatant est choisi dans le groupe constitué par les polyols, les gluconates, les sorbitols, les mannitols, les carbonates ou tout mélange de ceux-ci,
et
l'activateur est choisi dans le groupe constitué par la soude caustique, l'oxyde de magnésium, le carbonate de sodium, le bicarbonate de sodium ou tout mélange de ceux-ci.

9. Procédé selon l'une quelconque des revendications précédentes, dans lequel le composant multifonctionnel mélangé à sec est mis en suspension dans un milieu non aqueux avant mélange et injection dans la formation.

10. Procédé selon l'une quelconque des revendications précédentes, comprenant en outre le moussage ou l'alimentation en énergie de la composition par addition d'un agent tensioactif et d'un composant gazeux choisi dans le groupe constitué par l'azote, le dioxyde de carbone, et tout mélange de ceux-ci.

11. Procédé selon l'une quelconque des revendications précédentes, dans lequel l'opération de traitement est une opération de fracturation, une opération de nettoyage ou le gravillonage d'un puits de forage.
